Europäisches Patentamt

(19) **European Patent Office**

Office européen des brevets

(11) Veröffentlichungsnummer : **0 152 572**
**B1**

(12) **EUROPÄISCHE PATENTSCHRIFT**

(45) Veröffentlichungstag der Patentschrift :
15.03.89

(51) Int. Cl.⁴ : **G 11 B 5/55**, G 11 B 5/50

(21) Anmeldenummer : **84114900.8**

(22) Anmeldetag : **07.12.84**

(54) Positioniereinrichtung für einen Magnetplattenspeicher.

(30) Priorität : 07.02.84 DE 3404231

(43) Veröffentlichungstag der Anmeldung :
28.08.85 Patentblatt 85/35

(45) Bekanntmachung des Hinweises auf die Patenterteilung : 15.03.89 Patentblatt 89/11

(84) Benannte Vertragsstaaten :
AT CH DE FR GB IT LI NL

(56) Entgegenhaltungen :
EP--A-- 0 020 177
GB--A-- 1 440 455
GB--A-- 2 100 052
GB--A-- 2 103 430
US--A-- 2 998 292
US--A-- 3 849 800
US--A-- 3 864 747
US--A-- 4 037 264
US--A-- 4 131 921
US--A-- 4 331 991
PATENTS ABSTRACTS OF JAPAN, Band 7, Nr. 160 (P-
210)[1305], 14. Juli 1983; & JP - A - 58 68 274
IBM JOURNAL OF RESEARCH AND DEVELOPMENT,
Band 20, Nr. 4, Juli 1976, Seiten 389-397, New York,
US; J.S. HEATH: "Design of a swinging arm actuator
for a disk file"
IBM TECHNICAL DISCLOSURE BULLETIN, Band 18,
Nr. 10, März 1976, Seiten 3435-3436, Armonk, New
York, US; H.G. DICKIE u.a.: "Disk file actuator"

(73) Patentinhaber : Siemens Aktiengesellschaft Berlin
und München
Wittelsbacherplatz 2
D-8000 München 2 (DE)

(72) Erfinder : Olbrich, Otto, Dipl.-Ing.
Birkenstrasse 39
D-8028 Taufkirchen (DE)
Erfinder : Schachl, Rudolf, Ing.-grad
Lindenring 36
D-8028 Taufkirchen (DE)
Erfinder : Vanek, Vaclav, Dipl.-Ing.
Wieselweg 10
D-8013 Haar (DE)

## Beschreibung

Die Erfindung bezieht sich auf eine Positioniereinrichtung für einen Magnetplattenspeicher gemäß dem Oberbegriff des Hauptanspruches.

Die technische Entwicklung bei Magnetplattenspeichern geht weiterhin ständig zu höheren Speicherkapazitäten, einerseits sowohl hinsichtlich der Spurdichte und der Bitdichte als Charakteristiken für die Speicherkapazität pro Plattenfläche, als auch hinsichtlich des mechanischen Aufbaus, um möglichst viele Magnetplatten in einem vorgegebenen Einbauraum unterzubringen. Ein Beispiel dafür ist der sogenannte 5 1/4 Zoll Festplattenspeicher, für den sich als Standard in Analogie zu den Abmessungen von konkurrierenden Floppy Disk Laufwerken ein Einbauraum mit einer Einbauhöhe von 82,5 mm und einer Grundfläche von 146 mm x 203 mm als Einheitsgröße herausgebildet hat.

Neben dem Bestreben, möglichst viele Magnetplatten in diesem vorgegebenen Einbauraum unterzubringen, d. h. den mechanischen Aufbau des Magnetplattenstapels und seine Anordnung im Gehäuse des Magnetplattenspeichers fortzuentwickeln, wird aber auch versucht, die Magnetkopfpositioniereinrichtung zu verbessern, um Zugriffszeit, Positioniergenauigkeit und damit Abtastsicherheit zu verbessern. Ein bedeutender Schritt in Richtung auf höhere Speicherdichten bei Magnetplattenspeichern wurde durch ein Positionierverfahren erreicht, bei dem die Magnetköpfe bezüglich der Magnetplatten nicht mehr absolut, sondern relativ in ihrem Lageverhältnis zu einer Servospur mit Hilfe eines Spurlagesignals positioniert werden, das auf einer Servoplatte fest vorgeschrieben ist. Bei diesem Positionierverfahren ist die Positioniereinrichtung ein bestimmender und integrierter Teil des Servoregelkreises. Dementsprechend sind die mechanischen Eigenschaften der Positioniereinrichtung mitbestimmend für Zugriffszeit, Zugriffsgenauigkeit und die Stabilität des Regelkreises.

Im Prinzip sind zwei verschiedene Arten von Positioniereinrichtungen bekannt, der Linearpositionierer und der Drehpositionierer. Beim Linearpositionierer wird ein Positionierwagen, an dem die Magnetkopfpositionierarme festgelegt sind, in radialer Richtung zu dem Magnetplattenstapel bei der Spurauswahl z. B. durch ein Tauchspulsystem bewegt. Der Drehpositionierer besitzt ein Schwenkteil, das aus einer Anzahl von Positionierarmen aufgebaut ist, die die Magnetköpfe tragen. Das Schwenkteil ist schwenkbar auf einer parallel zur Achse des Plattenstapels angeordneten Positioniererachse gelagert und besitzt ein Paar Tragarme auf der den Schwenkarmen abgewandten Seite. Die Tragarme tragen entweder eine Spule, die gegenüber feststehenden Magneten ausgelenkt wird oder einen Magneten, wobei dann die erregte Spule fest angeordnet ist. Im ersteren Falle ist der Drehpositionierer also als Schwenkspulpositionierer, im letzteren Falle als Magnetankerpositionierer ausgebildet.

Beide Typen des Drehpositionierers sind an sich, wenigstens im Vergleich zu dem genannten Linearpositionierer, gleichwertig. Der Drehpositionierer wird bei heute gebräuchlichen kleineren Magnetplattenspeichern sehr häufig eingesetzt, seine tatsächlich zu bewegende Masse ist geringer, er kann kleiner gebaut werden und verbraucht daher weniger Energie. Insgesamt ist er also schneller und leichter steuerbar.

Bekannte Drehpositionierer für Mehrplattenspeicher sind so aufgebaut, daß Schwenkarme mit direkt daran federnd angeordneten Magnetköpfen vorgesehen sind, die einander zugekehrten Plattenoberflächen benachbarter Magnetplatten zugeordnet sind. Die Schwenkarme sind auf einer Nabe unter Zwischenlage von Abstandsstücken festgespannt und die Nabe wiederum sitzt auch bereits beidseitig gelagert auf der Positioniererachse. Diese Achse ihrerseits ist, bei bekannten Drehpositionierern meist einseitig, zum Teil aber auch beidseitig gehalten, am Gehäuse des Magnetplattenspeichers festgelegt.

Bei diesem Aufbau des Drehpositionierers, sowie er z. B. in IEEE Transactions on Magnetics, Vol. Mag-17, No. 4, Juli 1981, S. 1392 ff., Electronics, 21. April 1982, S. 181 ff. oder Mini-Microsystems, Febr. 1983, S. 143 ff. beschrieben ist, besteht allerdings ein Nachteil. Das Schwenkteil ist aus einer Mehrzahl von zueinander auszurichtenden Einzelteilen zusammengesetzt. Je nach Ausführungsform ist zum Auswechseln von Magnetköpfen entweder der ganze betreffende Schwenkarm mit der Magnetkopfhalterung auszutauschen, d. h. das Schwenkteil ist vorher auseinanderzunehmen oder zumindestens der Drehpositionierer ist als Einheit auszubauen, da die Magnetkopfhalterung nur aus der Richtung des Plattenstapels her zugänglich und vom Schwenkarm lösbar ist. Reparaturen erfordern daher in jedem Fall komplizierte Demontagen und anschließend erneute Justagen, um die Magnetkopfsysteme, bzw. die Schwenkarme zueinander höhen- und lagerecht auszurichten.

Darüberhinaus ist aus JP-A-58 68 274 eine Positioniereinrichtung für einen Magnetplattenspeicher bekannt, die als Drehpositionier ausgebildet ist. Sie weist einen Lagerbock auf, der einen Teil eines Magnetantriebsystems bildet und eine Positioniererachse trägt. Ein einteiliger Schwenkkörper ist auf der Positioniererachse drehbar gelagert, in den Schwenkkörper sind Positionierarme, die Magnetköpfe tragen, integriert. Wenn die Positionierarme als in den Schwenkkörper integriert bezeichnet sind, dann soll dies heißen, daß die Positionierarme unmittelbare Bestandteile des Schwenkkörpers bilden. Das steht im Gegensatz zu der Ausbildung der vorstehend gewürdigten bekannten Positioniereinrichtung, bei der die Positionierarme separate Elemente darstellen, die lösbar mit dem Schwenkkörper verbunden sind. Die Positionierarme sind bezüglich ihrer Längsachse, die zur Positioniererachse senkrecht steht. symmetrisch aufgebaut und tragen an ihren freien, paarweise zinkenförmig ausgebildeten Enden Aufnahmevorrichtungen für eine über eine Schwalbenschwanzverbindung lösbar befestigte Kopfgrundplatte. Diese mittelbare Festlegung der Magnetköpfe über eine Kopfgrundplatte an den Positionierarmen erlaubt es, diese — wie erläutert — in den Schwenkkörper zu integrieren und damit die geschilderten Montage — bzw. Reparaturprobleme zu eliminieren. Die Integration der Positionierarme in den Schwenkkörper ermöglicht es. diese bei reduzierter Masse steifer zu gestalten, so daß Resonanzschwingungen reduziert werden. Allerdings ist die gewählte Befestigung der Kopfgrundplatte an den Positionierarmen relativ aufwendig, wird jedoch offenbar als notwendig erachtet, um die Positioniergenauigkeit beeinträchtigende Toleranzen zu beherrschen.

Eine andere Lösung zur Vereinfachung von Montage- und Reparaturvorgängen ist aus IBM Technical Disclosure Bulletin, Vol.18 Nr. 10, März 1976, S. 3435 und 3436 bekannt. Bei diesem bekannten Drehpositionierer sind die Magnetköpfe tragende Tragarme einzeln am Schwenkkörper lösbar befestigt. Der Schwenkkörper besteht aus einer Nabe und aus einem an der Nabe dazu rechtwinklig stehend befestigten Tragrahmen. Nabe und Tragrahmen weisen in Form von Nuten ausgebildete Aufnahmevorrichtungen für die Positionierarme auf. Aufgrund der Ausgestaltung von Nabe und Tragrahmen stehen die Nuten zueinander rechtwinklig. Zum Festlegen der Tragarme in den Nuten ist jeweils eine Klammer vorgesehen, die an der Nabe mit einer Schraube befestigt ist. Der Tragrahmen weist im Übergangsbereich zur Nabe als Justieranschlag einen Ansatz auf, der mittels des Klammer gegen eine Aussparung im Tragarm beaufschlagbar ist. Dieser bekannte Drehpositionierer besitzt daher, keinen einteiligen Schwenkkörper mit integrierten Positionierarmen, sondern zeigt eine Ausgestaltung mit an einem mehrteiligen Schwenkkörper mit Hilfe einer Aufnahmeeinrichtung lösbar befestigten Tragarmen.

Bei heutigen Laufwerken für Plattenspeicher werden jedoch die Anforderungen an die Genauigkeit der Positionierung und an die Zugriffsgeschwindigkeit immer höher geschraubt, so daß bei der Weiterentwicklung von Magnetplattenspeichern in kleinen Schritten alle Anstrengungen unternommen werden, die bekannten Positioniereinrichtungen dafür unter weitmöglicher Eliminierung noch vorhandener Fehlerquellen zu gestalten.

Der Erfindung liegt daher die Aufgabe zugrunde, die im Oberbegriff des Patentanspruches 1 näher bezeichnete Positioniereinrichtung hinsichtlich eines eindeutig reproduzierbaren Massenträgheitsmomentes und der Vibrationsfestigkeit weiter in der Weise zu verbessern, daß weitgehend alle den gesamten Rotationskörper bestimmenden Massen in einen einteiligen, mit geringen Toleranzen vorgefertigt ausbalancierten Schwenkkörper integriert sind. Sofern dies nicht vollständig möglich ist, sollen dann wenigstens die noch zusätzlich am Schwenkkörper zu befestigenden Bauteile mit möglichst geringen geketteten Toleranzen auf einfache Weise montierbar sein.

Die Aufgabe wird den im Kennzeichen des Hauptanspruches beschriebenen Merkmalen gelöst.

Diese Lösung beinhaltet einen weiterentwickelten Aufbau des Schwenkkörpers. Dies bezieht sich einmal auf eine möglichst steife Festlegung der Magnetspule zwischen den freien Enden eines Paares von auskragenden Auslegerarmen des Schwenkkörpers. Einerseits dienen die Auslegerarme als Massenausgleich bezüglich der Positionierarme, so daß der gesamte Schwenkkörper bezüglich der Positioniererachse ausbalanciert ist. andererseits ist damit die Magnetspule nicht einseitig am Schwenkkörper befestigt, braucht deswegen nicht freitragend ausgebildet zu sein und ist weniger schwingungsempfindlich. Ausserdem wird damit das Magnetantriebsystem — soweit möglich — in den einteiligen Schwenkkörper direkt einbezogen. Weiterhin wird eine hohe Torsionsfestigkeit und Steifigkeit der Positionierarme dadurch erreicht, daß vom Nabenbereich des Schwenkkörpers tangential eine allen Positionierarmen gemeinsame Rückwand absteht, an deren freiem Ende die Aufnahmevorrichtungen der einzelnen Positionierarme vorgesehen sind. Da diese als Winkelstücke mit zueinander rechtwinklig verlaufenden Führungsnuten ausgebildet sind, ist der von der Rückwand abstehende Schenkel dieses Winkelstückes noch zusätzlich durch massearme Tragelemente mit dem Nabenkörper verbunden.

Schließlich ist erfindungsgemäß die konstruktive Verbindung von den Magnetkopfträgern, d. h. den Kopfgrundplatten mit den Positionierarmen derart gelöst, daß eine aufwendige Schwalbenschwanzführung, die eng toleriert sein muß, wenn sie wirksam sein soll, vermieden ist. Diese Lösung ist außerdem selbstzentrierend, so daß sich Toleranzkettungen bei der Montage in Grenzen halten und zugleich Justierarbeiten an den Magnetkopfträgern vereinfacht sind.

Erfindungsgemäß sind die Magnetkopfhalterungen auf einer Kopfgrundplatte festgelegt sind, die einfach, zuverlässig, sicher und lagegenau an einem freien Ende des jeweiligen Positionierarmes festgelegt ist. Dabei ist es wesentlich, daß diese Kopfgrundplatte zusammen mit der jeweiligen Magnetkopfhalterung von der dem Plattenstapel abgewandten Rückseite des Schwenkkörpers her an dem jeweiligen Positionierarm festgelegt ist. Durch diese Maßnahme ist sichergestellt, daß die empfindlichen Oberflächen der Magnetplatten beim Austausch von Magnetköpfen nicht beschädigt werden. Weiterbildungen der Erfindung ergeben sich aus Unteransprüchen bzw. aus der Beschreibung eines Ausführungsbeispiels.

Ein Ausführungsbeispiel der Erfindung wird im folgenden anhand der Zeichnung näher beschrieben. Dabei zeigt :

Fig. 1 einen Schnitt durch ein Gehäuse eines Magnetplattenspeichers mit einem schematisch dargestellten Magnetplattenstapel und einem diesem zugeordneten Drehpositionierer und

Fig. 2 den prinzipiellen Aufbau eines Schwenkteiles dieses Drehpositionierers in einer dreidimensionalen Darstellung.

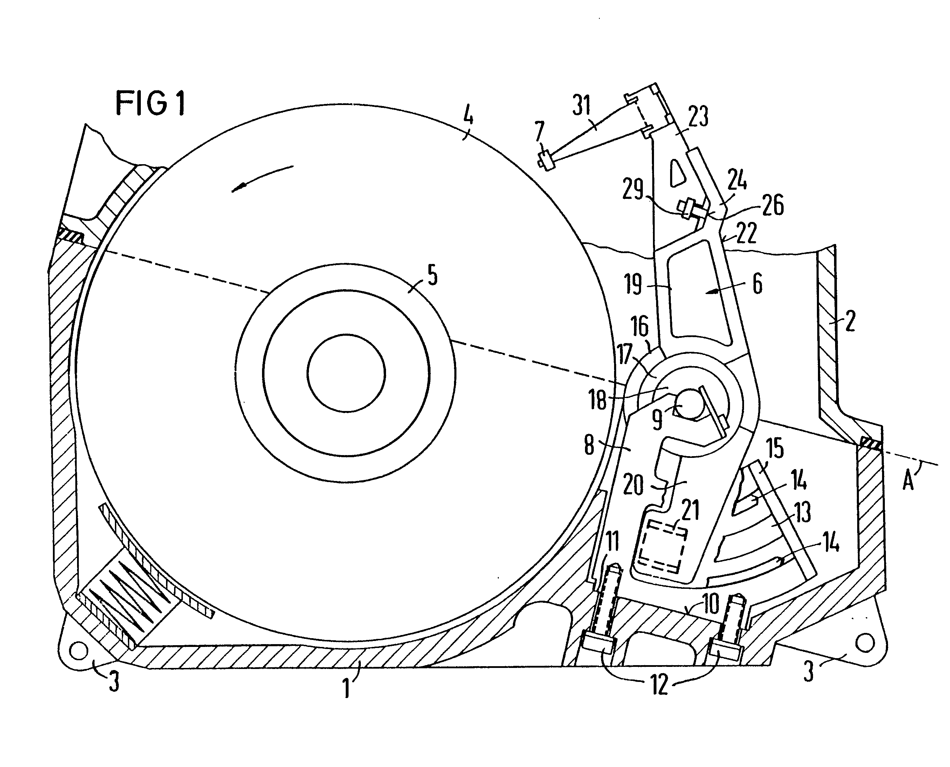

Das in Fig. 1 in einem Schnitt dargestellte Gehäuse eines Magnetplattenspeichers ist im wesentlichen ein rechteckförmiger Kasten, der längs einer diagonal verlaufenden Trennebene A in eine Tragschale 1 und einen Deckel 2 unterteilt ist. Die Tragschale 1, aber auch der Deckel 2 besitzen jeweils Befestigungsösen 3, mit denen das Gehäuse z. B. in einem nicht dargestellten Rahmen aufgehängt werden kann.

Das Gehäuse ist aufgeschnitten dargestellt, um das Innere des Magnetplattenspeichers und damit seine wesentlichen Baueinheiten zu zeigen. So wird ein schematisch dargestellter Plattenstapel 4 sichtbar, der auf einer Nabe 5 angeordnet ist und in Pfeilrichtung umläuft. Seitlich neben dem Plattenstapel 4 ist ein Drehpositionierer 6 angeordnet, der in Rastposition gezeigt ist, bei der Magnetköpfe 7 aus dem Plattenstapel herausgefahren sind.

Der Drehpositionierer 6 besitzt einen U-förmig gestalteten Lagerbock 8, an dessen Schenkelenden eine Positioniererachse 9 festgelegt ist, die parallel zur Achse des Plattenstapels 4 ausgerichtet ist. Es ist ein Konstruktionsziel, die Eintauchtiefe des Drehpositionierers 6 in die Tragschale 1 möglichst klein zu halten, zum anderen ist es im Sinne unkritischer Toleranzen fertigungstechnisch auch einfacher, wenn die Trennebene A, d. h. der Rand der Tragschale 1, als Maßbezugsebene für den Anschraubbereich des Lagerbockes 8 an eine Stirnwand der Tragschale 1 herangezogen wird. Aus diesem Grunde ist die Stirnwand in diesem Anschraubbereich nach innen gezogen und weist eine parallel zur Trennebene A verlaufende Anschraubfläche 10 auf. Diese ist mit Ansätzen 11 in die Stirnwand eingeschnitten, so daß der Lagerbock 8 zu dieser Fläche zentriert werden kann. Dieser Anschraubfläche 10 zugeordnet, weist die Stirnwand der Tragschale 1 Durchgangsbohrungen 11 auf, in die Befestigungsschrauben 12 zum Befestigen des Lagerbockes 8 an der Anschraubfläche 10 von außen eingeführt sind.

Der Drehpositionierer 6 kann nach dem Schwenkspulprinzip, wie im vorliegenden Ausführungsbeispiel, oder aber auch nach dem Magnetankerprinzip ausgebildet sein. Im vorliegenden Fall bildet der Lagerbock 8 einen Teil des Magnetsystems. Dazu ist zwischen seinen Schenkeln ein Magnetkern 13 angeordnet, der wie ein Kreisringabschnitt ausgebildet ist. Zu beiden Seiten dieses Magnetkernes 13 sind entsprechend geformte Permanentmagnete 14 im Lagerbock 8 angeordnet. Als Magnetjoch ist eine Rückflußplatte 15 an den freistehenden Enden des Magnetkernes bzw. der Permanentmagnete festgelegt. Der Lagerbock 8 übernimmt damit eine doppelte Funktion, er gestattet die Positioniererachsen 9 beidseitig zu lagern und bildet zugleich einen Teil des Magnetsystemes für den Drehpositionier 6.

Auf der feststehenden Positioniererachse 9 ist ein einteiliger Schwenkkörper 16 drehbar gelagert. Der Schwenkkörper weist dazu eine Nabe 17 auf, die über nur schematisch dargestellte Kugellager 18 auf der Positioniererachse 9 drehbar angeordnet ist. In diesen Schwenkkörper 16 sind Schwenkarme 19 bzw. Spulenausleger 20 integriert, die zu beiden Seiten von der Nabe 17 abstehen. Beide Spulenausleger 20 sind parallel zueinander ausgerichtet und sitzen jeweils an einer der beiden Seiten der Nabe 17 auf. Zwischen ihren freistehenden Enden ist eine Spule 21 angeordnet, die den Magnetkern 13 umfassend zwischen den Permanentmagneten 14 geführt ist. Es sei noch darauf hingewiesen, daß der Lagerbock 8 in Fig. 1 teilweise aufgeschnitten dargestellt ist, um dieses Magnetsystem des Drehpositionierers 6 besser zeigen zu können. Die Spule 21 liegt in der Darstellung von Fig. 1 unsichtbar unter dem oberen der beiden Spulenausleger 20.

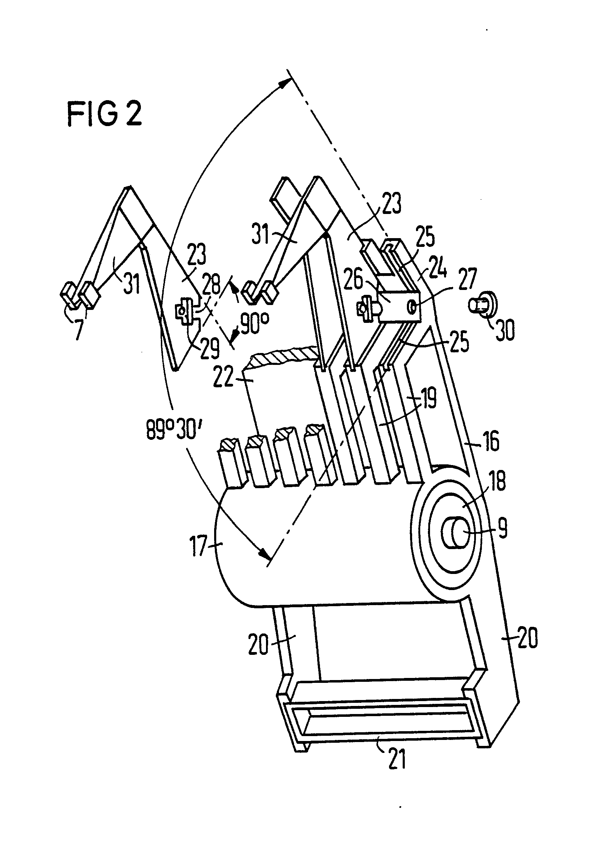

Zur besseren Veranschaulichung ist dieser Schwenkkörper 19 als Einzelteil nochmals in Fig. 2, nun in einer dreidimensionalen Darstellung, gezeigt. In dieser Darstellung wird nun deutlicher, daß der Schwenkkörper 16 eine Mehrzahl von parallel und in einem vorgegebenen Abstand voneinander angeordneten Schwenkarmen 19 aufweist. Im vorliegenden Beispiel ist davon ausgegangen, daß der Magnetplattenstapel 4 beispielsweise aus sieben Magnetplatten aufgebaut ist und daß jeder dieser Magnetplatten ein Schwenkarm 19 des Drehpositionierers 6 zugeordnet ist. Die Rückseiten der Schwenkarme 19 bilden gemeinsam aus Versteifungsgründen eine durchgehende Rückwand 22.

Die Frontenden der Schwenkarme 19 sind in besonderer Weise als Aufnahmevorrichtung geformt, um jeweils eine Kopfgrundplatte 23 aufzunehmen. Jedes freie Ende eines Schwenkarmes 19 weist ein Winkelstück 24 auf, in das Führungsnuten 25 eingelassen sind, die im wesentlichen rechtwinklig zueinander in einer zur Positioniererachse 9 vertikal liegenden Ebene angeordnet sind. In der Tat ist die gegenseitige Winkelstellung der Führungsnuten 25 hier von besonderer Bedeutung und beträgt etwas weniger als 90°, wie dies in Fig. 2 mit einem Winkel von 89° 30' beispielhaft angegeben ist.

Diese Führungsnuten 25 stellen die Führungen für die entsprechend geformte Kopfgrundplatte 23 dar, die im wesentlichen die Form eines rechtwinkligen Dreiecks besitzt. Die beiden exakt rechtwinklig zueinander stehenden Seiten der Kopfgrundplatte werden in die entsprechenden Führungsnuten von oben eingeschoben. Zur Befestigung der Kopfgrundplatten 23 sind nun die Schwenkarme 19 nicht bis zum Grund durchgeschlitzt, sondern weisen eine Auflagefläche 26 auf, die exakt im Schnittpunkt der Zentralachse der Führungsnuten 25 jeweils eine Durchgangsbohrung 27 besitzt. Dementsprechend ist die entsprechende Dreiecksspitze der Kopfgrundplatten 23 abgeschnitten und weist in diesem Bereich einen längs der Winkelhalbierenden verlaufenden, T-förmig gestalteten Schlitz 28 auf. In das querliegende Kopfende dieses Schlitzes 28 ist eine Vierkantmutter 29 eingelegt, die mit einer von der Rückseite des Schwenkkörpers 16 her eingelegte Spannschraube 30 verschraubt ist. Die Dicke der Kopfgrundplatten 23 ist der Breite der Führungsnuten 25 maßlich so zugeordnet, daß zusammen mit der 0,5° Winkelvorgabe eine definierte Lage der Kopfgrundplatten 23 erzielt wird. Dabei gewährleistet die Wirkrichtung der Schraubverbindung eine gleichmäßige Kraftverteilung an den Auflagestellen der Dreiecksschenkel der Kopfgrundplatte 23 in den Führungsnuten 25. Hier ist nun deutlich, daß der rechte Winkel der Führungsnuten 25 nur eine Möglichkeit darstellt. Andere Winkel könnten gewählt werden, solange die Dreiecksform der Kopfgrundplatte 23 daran angepaßt ist.

Schließlich ist noch festzustellen, daß an der außenstehenden spitzwinkligen Dreiecksseite jeder Kopfgrundplatte 23 eine Magnetkopfhalterung 31 festgelegt ist, die an ihren Enden je ein Paar von Magnetköpfen 7 trägt.

Das beschriebene Ausführungsbeispiel verdeutlicht den Unterschied zu konventionellen Drehpositionierern. Während bei diesen einzelne Positionierarme unter Zwischenlage von Distanzstücken übereinander geschichtet werden und damit das Schwenkteil bilden, sind hier diese Arme zusammen mit den Spulenauslegern in einen einteiligen Schwenkkörper integriert, der z. B. als Formgußteil oder als Strangpreßprofil hergestellt werden kann. Dieses Konstruktionsprinzip ermöglicht, den Schwenkkörper durch entsprechende Formgebung bei insgesamt geringer Masse dennoch sehr verwindungssteif auszubilden. Zudem kann sein Gesamtschwerpunkt so gewählt werden, daß er möglichst mit der Positioniererachse zusammenfällt, was den Drehpositionierer ausbalanziert.

Soweit es den Drehpositionierer selbst betrifft, ist damit eine der wesentlichen Voraussetzungen geschaffen, um trotz hoher Spurdichten mit kurzer Zugriffszeit die Magnetköpfe exakt auf eine bestimmte Spurlage einzustellen. Eine derartige Ausbildung des Schwenkkörpers andererseits ist aber nur möglich in Verbindung mit der beschriebenen Austauschbarkeit der Magnetkopfhalterungen aufgrund der lösbaren Verbindung von Kopfgrundplatten und Schwenkarmen. Dieses Konstruktionsdetail erfüllt damit gleichzeitig zwei Forderungen, die an einen modernen Magnetplattenspeicher zu stellen sind, nämlich Montage- und Reparaturfreundlichkeit, d. h. eine Austauschbarkeit der Magnetköpfe an sich ohne teuere Justage, einerseits und andererseits die Ausgestaltung des Schwenkkörpers als ein einteiliges Bauelement, das dann freizügig unter Zugrundelegung moderner Konstruktionsprinzipien bei geringer Masse dennoch verwindungssteif ausgelegt werden kann.

## Patentansprüche

1. Positioniereinrichtung für einen Magnetplattenspeicher nach der Art eines Drehpositionierers mit einem einen Teil eines Magnetantriebsystems bildenden und eine Positioniererachse tragenden Lagerbock und mit einem einteiligen, auf der Positioniererachse drehbar gelagerten Schwenkkörper, in den Positionierarme, die Magnetköpfe tragen, integriert sind, wobei jeder Positionierarm an seinem freien Ende eine Aufnahmevorrichtung für eine lösbar befestigte Kopfgrundplatte aufweist, die mindestens einen Magnetkopf trägt, dadurch gekennzeichnet, daß bezüglich ihrer Form und Masse gegenüber den Positionierarmen (19) ausbalanzierte und diesen radial gegenüberstehende Auslegerarme (20) als ein Paar von auskragenden Spulenauslegerarmen ausgebildet sind, von deren freien Enden eine Spule (21) vollständig umfaßt ist, die den im Lagerbock (8) angeordneten Elementen des Magnetantriebsystems (13, 14) zugeordnet ist, daß die Mehrzahl von Positionierarmen (19) eine durchgehende, gemeinsame, bis in die Höhe der Aufnahmevorrichtung (24) reichende Rückwand (22) aufweisen und daß die Aufnahmevorrichtungen (24) als aus der Rückwand vorspringende Winkelstücke mit zwei zueinander in einem vorgegebenen Winkel stehenden Schenkeln ausgebildet sind, in die jeweils eine Führungsnut (25) eingelassen ist, wobei beide Führungsnuten jeweils in einer zu der Positioniererachse (9) vertikalen Ebene liegen, und daß dementsprechend die zugeordnete Kopfgrundplatte (23), die Gestalt eines Dreiecks mit einem gewissen Übermaß des vorgegebenen Winkels und einer der Breite der Führungsnuten entsprechenden Dicke in diese Führungsnuten eingesetzt ist.

2. Positioniereinrichtung für einen Magnetplattenspeicher nach Anspruch 1, dadurch gekennzeichnet, daß der Winkel zwischen den Zentralachsen der Führungsnuten (25) um weniger als 1° unter einem rechten Winkel liegt, während die zugeordneten Schenkelseiten der Kopfgrundplatte (23) zueinander exakt rechtwinklig ausgebildet sind.

3. Positioniereinrichtung nach Anspruch 1 oder 2, dadurch gekennzeichnet, daß eine am Grunde des Winkelstückes (24) angeordnete, unter 45° geneigte und der Kopfgrundplatte (23) zugewandte Anlagefläche (26) vorgesehen ist, die eine im Schnittpunkt der Zentralachsen der Führungsnuten (25) liegende Durchgangsbohrung (27) aufweist, daß die Kopfgrundplatte (23) an ihrer dieser Anlagefläche zugewandten Seite unter dem entsprechenden Winkel abgeschnitten ist und einen zur Achse der Durchgangsbohrung fluchtenden T-förmigen Schlitz (28) aufweist, in dessen quer liegendes Kopfende eine Vierkantmutter (29) eingelegt ist und daß von der Rückseite des Positionierarmes (19) her eine Spannschraube (30) durch die Durchgangsbohrung hindurchreichend in die Vierkantmutter eingeschraubt ist.

4. Positioniereinrichtung für einen Magnetplattenspeicher nach einem der Ansprüche 1 bis 3, dadurch gekennzeichnet, daß der Schwenkkörper (16) als Druckgußformteil hergestellt ist.

5. Positioniereinrichtung für einen Magnetplattenspeicher nach einem der Ansprüche 1 bis 3, dadurch gekennzeichnet, daß der Schwenkkörper (16) als Strangpreßprofil hergestellt ist.

## Claims

1. A positioning device for a magnetic disc store in the form of a rotary positioner comprising a bearing block which forms a part of a magnetic drive system and which bears a positioning axle, and comprising a one-piece swivel component which is pivot-mounted on the positioning axle and into which are integrated positioning arms which bear the magnetic heads, where each positioning arm is provided at its free end with an accommodating device for a detachably connected head base plate which bears at least one magnetic head, characterised in that bracket arms (20) which are balanced in respect of their shape and mass in relation to the positioning arms (19) and which project radially beyond the positioning arms are designed as a pair of projecting coil extension arms whose free ends completely embrace a coil (21) which is assigned to those elements of the magnetic drive system (13, 14) which are arranged in the bearing block (8), that the plurality of positioning arms (19) possess a continuous, common rear wall (22) which extends to the level of the accommodating device (24), and that the accommodating devices (24) consist of angled components which project from the rear wall and which have two flanks which form a predetermined angle with one another and into each of which a guide groove (25) is inlet, where the two guide grooves are each arranged in a plane which is vertical to the positioning axle (9), and that accordingly the assigned head base plate (23), which has the shape of a triangle with a certain overdimensioning of the given angle and with a thickness which corresponds to the breadth of the guide grooves, is inserted into these guide grooves.

2. A positioning device for a magnetic disc store as claimed in Claim 1, characterised in that the angle between the central axes of the guide grooves (25) is less than 1° less than a right angle, whereas the assigned sides of the head base plate (23) exactly form a right angle with one another.

3. A positioning device as claimed in Claim 1 or 2, characterised in that a contact surface (26) is provided which is arranged on the base of the angled component (24), is inclined at 45° and faces towards the head base plate (23) and which contains a through-bore (27) located at the intersection point of the central axes of the guide grooves (25), that the head base plate (23) is cut off at the appropriate angle on its side facing towards the contact surface, and contains a T-shaped slot (28) which is aligned with the axis of the through-bore and into the transverse head end of which a square nut (29) is inserted, and that from the rear side of the positioning arm (19) a tightening screw (30) is screwed through the through-bore into the square nut.

4. A positioning device for a magnetic disc store as claimed in one of the Claims 1 to 3, characterised in that the swivel component (16) is produced as a die-cast moulded component.

5. A positioning device for a magnetic disc store as claimed in one of the Claim 1 to 3, characterised in that the swivel component (16) is produced as an extruded section.

## Revendications

1. Dispositif de positionnement pour une mémoire à disques magnétiques, du type en forme de dispositif de positionnement rotatif, comportant un support constituant un système d'entraînement magnétique et comportant un axe de positionnement, et un corps pivotant monobloc, monté de manière à pouvoir pivoter sur l'axe de positionnement et dans lequel sont intégrés des bras de positionnement portant des têtes magnétiques, chaque bras de positionnement possédant, au niveau de son extrémité libre, un dispositif récepteur pour une plaque de base porte-têtes, fixée de façon amovible et portant au moins une tête magnétique, caractérisé par le fait que des bras en console (20) qui contrebalancent, du point de vue de leur forme et de leur masse, les bras de positionnement (19) et font saillie radialement à partir de ces derniers, sont réalisés sous la forme d'un couple de bras en console, dont les extrémités libres entourent complètement une bobine (21) qui est associée aux éléments, situés dans le support (8), du système (13, 14) d'entraînement magnétique, que les différents bras de positionnement (19) possèdent une paroi arrière continue et commune (22), qui s'étend jusqu'à la hauteur du dispositif récepteur (24), et que les dispositifs récepteurs (24) sont réalisés sous la forme de pièces coudées qui font saillie hors de la paroi arrière et comportent deux branches faisant entre elles un angle prédéterminé et dans lesquelles sont ménagées des rainures respectives de guidage (25), les deux rainures de guidage étant situées respectivement dans un plan perpendiculaire à l'axe de positionnement (9), et que par conséquent la plaque de base associée porte-têtes (23), qui possède la forme d'un triangle et dont l'épaisseur correspond à la largeur des rainures de guidage, est insérée dans ces dernières par un sommet dont l'angle présente une certaine surcote par rapport à l'angle prédéterminé.

2. Dispositif de positionnement pour une mémoire à disque magnétique suivant la revendication 1, caractérisé par le fait que l'angle entre les axes centraux des rainures de guidage (25) est inférieur, de moins de 1°, à un angle droit, tandis que les côtés associés des branches de la plaque de base porte-têtes (23) sont exactement perpendiculaires entre eux.

3. Dispositif de positionnement suivant la revendication 1 ou 2, caractérisé par le fait qu'il est prévu une surface d'appui (26) inclinée à 45°, disposée à la base de la pièce coudée (24) et associée à la plaque de base porte-têtes (23) et possédant un perçage traversant (27) situé au niveau du point d'intersection des axes centraux de rainure de guidage (25), que la plaque de base porte-têtes (23) est découpée sous l'angle correspondant au niveau de son côté tourné vers cette surface d'appui et comporte une fente en forme de T (28), qui est alignée avec l'axe du perçage traversant et dans l'extrémité de tête transversale de laquelle se trouve inséré un écrou carré (29), et une vis de serrage (30), qui s'étend à l'intérieur du perçage traversant, est vissée dans l'écrou carré à partir de la face arrière du bras de positionnement (19).

4. Dispositif de positionnement pour une mémoire à disques magnétiques suivant l'une des revendications 1 à 3, caractérisé par le fait que le corps pivotant (16) est réalisé sous la forme d'une pièce moulée sous pression.

5. Dispositif de positionnement pour une mémoire à disques magnétiques suivant l'une des revendications 1 à 3, caractérisé par le fait que le corps pivotant (19) est réalisé sous la forme d'une pièce extrudée.

FIG 1

EP 0 152 572 B1

# FIG 2